# EUROPÄISCHE PATENTANMELDUNG

(11) **EP 4 140 296 A1**
(43) Veröffentlichungstag der Anmeldung: **01.03.2023**
(21) Anmeldenummer: 22020405.1
(22) Anmeldetag: 22.08.2022
(51) Int. Cl.: A01K 31/00, A01K 1/03, A01K 31/08, E04B 1/343

(54) **STALL FÜR TIERE, INSPESONDERE HÜHNERSTALL**

(30) Priorität: 27.08.2021 AT 1472021
(71) Anmelder: Stimpfl-Abele, Benedikt, 3400 Klosterneuburg (AT)
(72) Erfinder: Stimpfl-Abele, Benedikt, 3400 Klosterneuburg (AT)
(74) Vertreter: Keschmann, Marc

(57) **Zusammenfassung**

Stall (1) für Tiere, insbesondere Hühnerstall, mit zumindest einer Bodenplatte (10), an der zumindest einen Bodenplatte (10) zerlegbar festgelegten Seitenwänden (3) sowie zumindest einer an den Seitenwänden (3) zerlegbar festgelegten Abdeckplatte (2), wobei zumindest eine Seitenwand (3) zumindest eine Öffnung (4) aufweist, an deren Rändern ein die Öffnung (4) verschließendes Einsatzteil (5) mittels Magnetelementen (29,29b) festlegbar ist.

## Beschreibung

Die vorliegende Erfindung betrifft einen Stall für Tiere, insbesondere Hühnerstall, mit zumindest einer Bodenplatte, an der zumindest einen Bodenplatte festgelegten Seitenwänden sowie zumindest einer an den Seitenwänden festgelegten Abdeckplatte. Die Erfindung betrifft weiters ein Set zum Aufbau eines solchen Stalls.

Die Haltung von Nutztieren im privaten Bereich und insbesondere die Haltung von Hühnern wird in letzter Zeit immer populärer. Dies liegt zu einem guten Teil darin begründet, dass Bevölkerungsschichten mit starkem Augenmerk auf Nachhaltigkeit die Auswüchse der Massentierhaltung in zunehmendem Maße nicht mehr tolerieren und daher beispielsweise Eier von einer Quelle beziehen wollen, deren Integrität hinsichtlich der Haltung der Hühner für sie außer Zweifel steht. Darüber hinaus erkennen viele Menschen den Reiz, nicht nur bisher als Haustiere bekannte Tierarten, sondern auch Nutztiere als vitaler Bestandteil einer ganzheitlichen und umweltbewussten Lebensgestaltung zu halten. Aus diesem Grund werden immer mehr Haushühner in privaten Gärten und auf privaten Wiesen gehalten.

Die größte Problematik hierbei liegt üblicher Weise in der Bereitstellung einer geeigneten Behausung für die Tiere, wobei klassische Käfige und Volieren als Behausung nur schwer an sich ändernde Erfordernisse angepasst werden können. So werden viele Bedürfnisse der Tiere und Erfordernisse an einen geeigneten Käfig oft erst nach einiger Zeit verstanden und zum anderen wächst eine Schar von Hühnern mitunter schnell an, sodass mehr Raum für deren Unterbringung zum Schutz vor der Witterung oder vor Raubtieren wie Füchsen, Mardern und dergleichen benötigt wird. Herkömmliche Käfige können jedoch nur durch umfassende Umbauarbeiten entsprechend erweitert oder geändert werden, sodass mitunter die Anschaffung einer neuen Behausung beziehungsweise eines neuen Stalls nötig wird.

Die vorliegenden Erfindung stellt sich daher die Aufgabe, einen Stall für Tiere aller Art, aber insbesondere einen Hühnerstall zu schaffen, der leicht und kostengünstig aufgebaut, geändert und erweitert werden kann.

Zur Lösung dieser Aufgabe ist ein Stall im Einklang mit der vorliegenden Erfindung dadurch gekennzeichnet, dass zumindest eine Seitenwand zumindest eine Öffnung aufweist, an deren Rändern ein die Öffnung verschließendes Einsatzteil mittels Magnetelementen festlegbar ist. Ebenso sind bevorzugt die zumindest eine Bodenplatte, die Seitenwände sowie die zumindest eine Abdeckplatte mittels Magnetelementen und/oder Stiften aneinander festgelegt.

Dadurch, dass die Bodenplatte, die Seitenwände sowie die Abdeckplatte zerlegbar miteinander verbunden sind, was bevorzugt mittels Magnetelementen und/oder mittels Stiften realisiert ist, kann der Körper des Stalls leicht zusammengebaut und die Öffnungen der Seitenwände mittels Magnetverbindungen mit Einsatzteilen versehen werden, die dem Stall verschiedene Funktionalitäten verleihen. Zusätzlich können Seitenwände und Abdeckplatten mit verschiedenen Funktionalitäten versehen werden, die durch die Zerlegbarkeit leicht nachträglich ergänzt werden können. Die Festlegung der Einsatzteile mittels Magnetelementen erlaubt es, die Einsatzteile in besonders einfacher Weise und insbesondere ohne den Einsatz von Werkzeugen auszutauschen, da bereits eine kleine Verschiebung der Einsatzteile relativ zu den Seitenwänden dazu führt, dass die magnetische Haltekraft aufgehoben wird und die Einsatzteile abgenommen werden können.

Die Magnetelemente sind somit an den Rändern der Bodenplatten, Seitenwände und Abdeckplatten sowie der Öffnungen beziehungsweise Einsatzteile mit komplementärer Polarität angeordnet und weisen beispielsweise eine Haltekraft von mindestens 2 kg, bevorzugt mindestens 3 kg je Magnetelementpaar auf.

Im einfachsten Fall, beispielsweise als Stall für Anwender, die erst mit der Hühnerhaltung beginnen, weist der Stall im Einklang mit einer bevorzugten Ausführungsform der vorliegenden Erfindung einen Boden aus einer Bodenplatte oder aus zwei aneinander anschließenden Bodenplatten auf, an dem allseitig Seitenwände festgelegt sind. Dies stellt die Grundstruktur des erfindungsgemäßen Stalls dar, wobei bereits hier verschiedene Funktionalitäten durch entsprechende Einsatzteile, wie sie im Folgenden noch beschrieben werden, realisiert werden können.

Bei der oben beschriebenen Grundkonfiguration ist es vorteilhaft, wenn die Bodenplatten und die Seitenwände aus im Wesentlichen gleich großen rechteckigen Platten bestehen, deren Länge das doppelte der Breite betragen. Hierbei bilden zwei derartiger rechteckiger Platten einen quadratischen Boden aus, an dessen vier Rändern die Seitenplatten jeweils mit ihrer Längsseite angebracht sind. Dadurch kann der Stall aus gleich großen Platten aufgebaut werden, sodass die Teilevielfalt reduziert, die Handhabbarkeit verbessert und die Verpackung und der Transport der Platten erleichtert werden kann.

Wenn die Hühnerschar im Laufe der Zeit anwächst, kann eine Erweiterung und Vergrößerung des erfindungsgemäßen Stalls erfolgen, wenn mehrere Bodenplatten zerlegbar miteinander verbunden sind und Seitenwände zumindest an frei liegenden Seiten der Bodenplatten festgelegt sind, wie dies einer bevorzugten Ausführungsform der vorliegenden Erfindung entspricht. Es kann somit der Grundriss des Stalls im Ausmaß jeweils einer weiteren Bodenplatte erweitert werden, je nachdem, wie viele Hühner in dem Stall Unterkunft finden sollen. Selbstverständlich werden hierbei auch Abdeckplatten im Ausmaß und in der Anzahl der verwendeten Bodenplatten ergänzt.

Wenn es erforderlich oder wünschenswert erscheint, kann der erfindungsgemäße Stall auch so gestaltet sein, dass an einer ersten Abdeckplatte zweite Seitenwände festgelegt sind und an diesen zweiten Seitenwänden eine zweite Abdeckplatte festgelegt ist, wobei die erste Abdeckplatte bevorzugt eine Öffnung aufweist, wobei bevorzugt an deren Rand zumindest ein Magnetelement zur magnetischen Festlegung einer Aufstiegshilfe für Tiere angeordnet ist. Auf diese Weise kann ein mehrstöckiger Stall geschaffen werden, der nicht nur platzsparend ist, sondern den Tieren verschiedene Bereiche bietet, in die sie sich zurückziehen können. Über die bevorzugt vorgesehen Aufstiegshilfe, die bevorzugt ebenfalls magnetisch am Rand der Öffnung in der ersten Abdeckplatte festlegbar ist, können die Tiere die Stockwerke wechseln.

Wenn es auch grundsätzlich vorgesehen ist, möglichst einheitliche Seitenwände zu schaffen und die verschiedenen Funktionalitäten über die jeweiligen Einsatzteile zu realisieren, kann die vorliegende Erfindung bevorzugt dennoch dergestalt weitergebildet sein, dass eine Seitenwand, bevorzugt zusätzlich zu einer Öffnung, eine Mehrzahl von länglichen Durchbrechungen zur Ausbildung eines Gitters aufweist. Eine solche Seitenwand kann somit eine spezifische Funktionalität bereitstellen und gleichzeitig die wohl grundlegendste Funktionalität der Belüftung des Stalls bieten.

Eine weitere spezifische Seitenwand weist im Einklang mit einer bevorzugten Ausführungsform der vorliegenden Erfindung an ihrer der Bodenplatte zugewandten Kante eine Ausnehmung zum Einschub einer Kotlade auf. Eine solche Kotlade kann somit durch die Ausnehmung eingeschoben werden und die Bodenplatte flächendeckend überlagern, sodass Kot, der von den Tieren ausgeschieden wird, aufgefangen wird. Die Kotlade kann regelmäßig entnommen und entsprechend gereinigt werden.

Eine weitere bevorzugte Ausführungsform der vorliegenden Erfindung sieht vor, dass ein Einsatzteil aus einem lichtundurchlässigen Material besteht. Dies ist insofern sinnvoll, als der morgendliche Hahnenschrei, der im privaten Bereich mitunter zu einer allzu frühen Unterbrechung der Nachtruhe der Hühnerhalter beziehungsweise deren Nachbarn führen kann, vom Hahn abhängig von der Lichtstärke im Inneren des Stalls abgegeben wird, sodass bei entsprechend lichtdichten Einsatzteilen der Hahnenschrei erst zu einem relativ späten Zeitpunkt erfolgt. Dies ist selbstverständlich nur der Fall, wenn insbesondere die Seitenwände und die Abdeckplatte(n) aus einem lichtundurchlässigen Material wie beispielsweise Holzplatten bestehen, wie dies einer bevorzugten Ausführungsform der vorliegenden Erfindung entspricht.

Andererseits ist es im Sinne einer artgerechten Tierhaltung notwendig, den Stall ausreichend mit Licht zu versorgen. Gemäß einer bevorzugten Ausführungsform der vorliegenden Erfindung besteht daher ein Einsatzteil aus einem lichtdurchlässigen Material oder weist ein Fenster aus einem lichtdurchlässigen Material auf. Durch das Vorsehen derartiger Einsatzteile, die einerseits lichtdurchlässig oder andererseits lichtundurchlässig sind, kann beispielsweise über Nacht ein lichtundurchlässiges Einsatzteil an einer Seitenwand angebracht werden, das am Morgen durch ein lichtdurchlässiges Einsatzteil ausgetauscht wird. Auf diese Weise erlaubt die erfindungsgemäße einfache Anbringung der Einsatzteile an den Seitenwänden durch die Magnetelemente die konfliktarme und artgerechte Hühnerhaltung im privaten Bereich.

Bevorzugt weist ein Einsatzteil eine Mehrzahl von länglichen Durchbrechungen zur Ausbildung eines Gitters auf. Ein solches Gitter kann an einer ansonsten geschlossenen Seitenwand angebracht werden, um eine gute Belüftung sicherzustellen.

Gemäß einer bevorzugten Ausführungsform der vorliegenden Erfindung ist es vorgesehen, dass ein Einsatzteil eine Tür aufweist, die bevorzugt motorbetrieben und automatisch öffenbar ist. Der erfindungsgemäße Stall kann auf diese Weise bei einem modularen Aufbau mit einer Tür versehen werden, die bei der bevorzugten Motorisierung automatisch und gegebenenfalls von einem Smart-Home System angesteuert werden kann, um beispielsweise auch bei Abwesenheit der Hühnerhalter den Tieren den nötigen Auslauf unter Tags und in der Nacht den Schutz vor Feinden zu gewährleisten.

Bevorzugt kann ein Einsatzteil ein Behältnis für Tierfutter aufweisen, wobei das Behältnis bevorzugt transparent und weiters bevorzugt mehrteilig ausgebildet ist. Auf diese Weise wird dem Stall die Funktionalität der Bereitstellung von Futter für die Tiere verliehen, wobei die bevorzugte transparente Ausführung des Behältnisses die einfache optische Kontrolle des Füllstandes des Behältnisses gestattet. Die bevorzugt vorgesehene mehrteilige Ausführung des Behältnisses gestattet es, das Behältnis zur Reinigung vollständig zu zerlegen.

Dasselbe gilt im Zusammenhang mit der Bereitstellung von Trinkwasser für die Tiere, wenn ein Einsatzteil einen Wasserbehälter aufweist, wobei der Wasserbehälter bevorzugt transparent und weiters bevorzugt mehrteilig ausgebildet ist, wie dies einer bevorzugten Ausführungsform der vorliegenden Erfindung entspricht.

Um das Halten von Hühnern auch wirtschaftlich nutzen zu können, ist der Stall gemäß einer bevorzugten Ausführungsform der vorliegenden Erfindung dergestalt weitergebildet, dass ein Einsatzteil eine sich in das Innere des Stalls erstreckende Legeschale für das Eierlegen ausbildet, wobei die Legeschale über eine öffenbare Abdeckung von außen zugänglich ist.

Die erfindungsgemäße modulare Beschaffenheit des erfindungsgemäßen Stalls gestattet es in einfacher Weise, auch Funktionalitäten bereitzustellen, die mit der Hühnerhaltung nicht in einem direkten Zusammenhang stehen. So ist es beispielsweise denkbar, dass ein Einsatzteil einen Pflanzbehälter aufweist, der in an einer Seitenwand des Stalls festgelegtem Zustand des Einsatzteils außerhalb des Stalls angeordnet ist. Diese bevorzugte Ausführungsform gestattet es somit, den Stall auch als Hochbeet zu nutzen, was insbesondere im städtischen Bereich nützlich sein kann, um beispielsweise Kräuter im Garten zu pflanzen. Am Ende der Saison kann das Einsatzteil mit dem Pflanzbehälter einfach gegen ein anderes Einsatzteil ausgetauscht werden.

Ebenso kann der erfindungsgemäße Stall auch zum Schutz von Insekten benützt werden, wenn ein Einsatzteil eine Vielzahl von sich quer zur Ebene der Seitenfläche erstreckenden Röhren, insbesondere Holzröhren, bevorzugt Bambusröhren aufweist. Solche Ansammlungen von Röhren sind als Insektenhotels bekannt und werden von Insekten als Eiablage genutzt. Wie schon zuvor im Zusammenhang mit dem Pflanzbehälter, kann ein solches Einsatzteil im Sommer beispielsweise wieder gegen ein Einsatzteil anderer Art ausgetauscht werden.

Neben den beschriebenen Einsatzteilen kann der erfindungsgemäße Stall auch andere Komponenten wie Beleuchtungskörper oder Heizelemente umfassen. Um diese zu versorgen, kann es gemäß einer bevorzugten Ausführungsform der vorliegenden Erfindung vorgesehen sein, dass ein Einsatzteil ein Gehäuse zur Aufnahme elektrischer Komponenten aufweist, wobei das Gehäuse in an einer Seitenwand des Stalls festgelegtem Zustand des Einsatzteils außerhalb des Stalls angeordnet ist.

Bevorzugt ist die vorliegende Erfindung dadurch gekennzeichnet, dass die Magnetelemente einen ersten, in einer ersten Ausnehmung teilweise aufgenommenen und aus der ersten Ausnehmung teilweise herausragenden Magneten und einen zweiten, in einer zweiten Ausnehmung vollständig aufgenommenen, Magneten umfassen, wobei die zweite Ausnehmung am Grund einer die zweite Ausnehmung umgebenden Vertiefung ausgebildet ist. Dies bedeutet, dass ein erster Magnet an einem ersten Teil des erfindungsgemäßen Stalls aus einer diesen ersten Magneten aufnehmenden Ausnehmung herausragend aufgenommen ist und der entsprechende Gegenmagnet, der zweite Magnet, in einer Ausnehmung eines zweiten Teils des erfindungsgemäßen Stalls vollständig aufgenommen und von einer Vertiefung in diesem zweiten Teil des Stalls umgeben ist. Dies hat den Vorteil, dass beim Auseinandernehmen der Teile durch seitliches Verschieben des ersten und des zweiten Teil relativ zueinander, um die magnetische Haltekraft zwischen dem ersten und dem zweiten Teil aufzuheben, der erste, aus seiner Ausnehmung herausragende Magnet am Rand der Vertiefung zur Anlage kommt und das seitliche Verschieben somit nicht dazu führt, dass beim plötzlichen Nachlassen der Magnetkraft, der mittels der Magnetelemente an dem anderen Teil des Stalls festgelegte Teil des Stalls plötzlich und unkontrolliert abrutscht. Vielmehr gerät der herausragende erste Magnet in Anlage an den Rand der Vertiefung und der mittels der Magnetelemente angebaute Teil kann dann aus dieser zum Gegenmagnet seitlich versetzten Stellung leicht abgenommen werden.

Ein erfindungsgemäßes Set zum Aufbau eines Stalls für Tiere, insbesondere eines Hühnerstalls, umfasst zumindest eine Bodenplatte, eine Abdeckplatte sowie Seitenwände und wenigstens ein Einsatzteil, bevorzugt eine Mehrzahl von Einsatzteilen, ausgewählt aus einem der zuvor beschriebenen Einsatzteile.

Die Erfindung wird nachfolgend anhand eines in der Zeichnung dargestellten Ausführungsbeispiels näher erläutert. In dieser zeigen
Figur 1 eine perspektivische Gesamtansicht eines erfindungsgemäßen Stalls,
Figur 2 eine Detailansicht von Stiften in Seitenwänden,
Figur 3 eine Detailansicht von Stiften in Abdeckplatten,
Figur 4 die Verwendung von Magnetelementen in einer auseinander gezogenen Darstellung,
Figur 5 eine perspektivische Ansicht einer Bodenplatte,
Figur 6 eine perspektivische Ansicht einer Abdeckplatte,
Figur 7 eine Seitenwand,
Figur 8 eine Seitenwand mit einer Öffnung und einer Mehrzahl von Durchbrechungen,
Figur 9 eine Seitenwand mit einer großen Öffnung,
Figur 10 eine Seitenwand mit Ausnehmung und Kotlade,
Figur 11 eine perspektivische Ansicht der Seitenwand gemäß Figur 10,
Figur 12 ein Einsatzteil aus einem lichtundurchlässigen Material,
Figur 13 ein Einsatzteil mit einer Mehrzahl von Durchbrechungen,
Figur 14 ein Einsatzteil mit einer motorisierten Tür,
Figur 15 eine Seitenansicht eines Einsatzteils mit einem Behältnis für Futtermittel,
Figur 16 eine Seitenansicht eines Einsatzteils mit einer Legeschale,
Figur 17 ein Einsatzteil mit einem Pflanzbehälter,
Figur 18 ein Einsatzteil mit einem Insektenhotel,
Figur 19 eine perspektivische Ansicht eines Einsatzteils mit einem Gehäuse zur Aufnahme von elektrischen Komponenten,
Figur 20 eine Darstellung von Magnetelementen für einen erfindungsgemäßen Stall und
Figur 21 ein Einsatzteil mit einer Acrylglasscheibe.

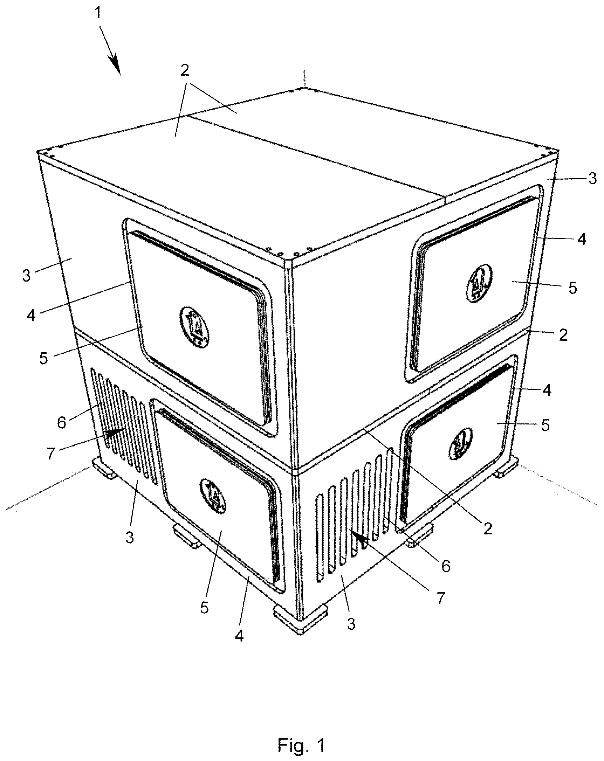

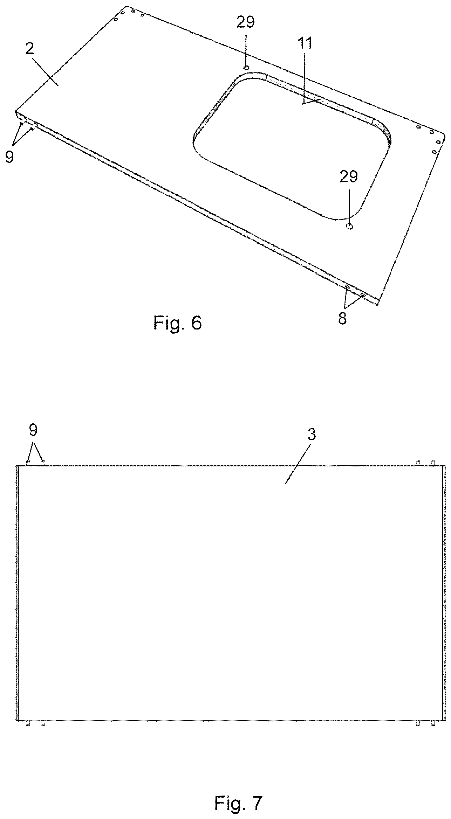

In Figur 1 ist ein erfindungsgemäßer Stall mit dem Bezugszeichen 1 versehen. Der Stall 1 besteht in diesem Beispiel aus in der Figur nicht ersichtlichen Bodenplatten, die in derselben Art nebeneinander angeordnet sind, wie die Abdeckplatten 2. Die Abdeckplatten 2 sind durch Stifte zerlegbar aneinander festgelegt. An der Bodenplatte sind Seitenwände 3 zerlegbar durch Stifte festgelegt. Die Seitenwände 3 weisen Öffnungen 4 auf, die durch entsprechende Einsatzteile 5 verschlossen sind. Eine Mehrzahl von Durchbrechungen 6 bilden ein Gitter 7 aus, durch die der Stall 1 belüftet wird. Im vorliegenden Fall ist der Stall 1 zweistöckig aufgebaut, wobei die beiden Stockwerke durch Abdeckplatten 2 voneinander getrennt sind, welche eine Öffnung 11 (siehe Fig. 6) samt daran angebrachter Aufstiegshilfe aufweist, um den Tieren einen Wechsel des Stockwerks zu ermöglichen.

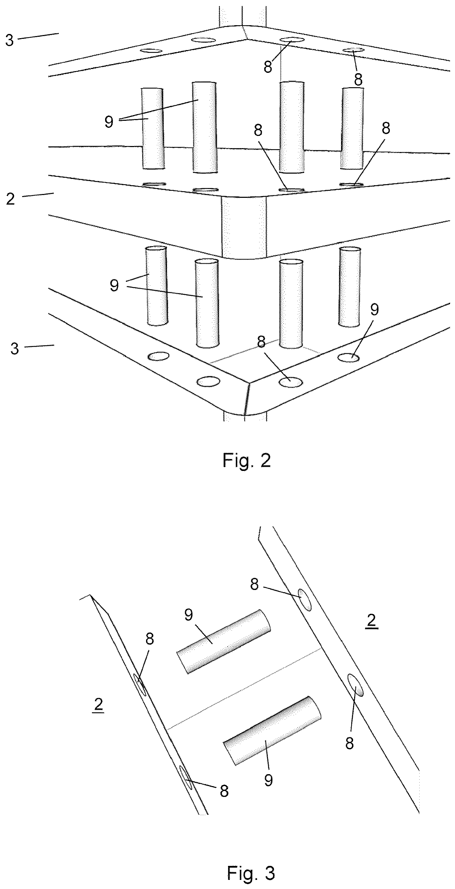

In Figur 2 ist zu erkennen, dass die Seitenwände 3 an ihren Stirnseiten Ausnehmungen 8 für Stifte 9 aufweisen, sodass die Seitenwände 3 zerlegbar und ohne Werkzeuge fest mit Bodenplatten oder Abdeckplatten 2 verbunden werden können. In Figur 3 sind zwei Abdeckplatten 2 durch Stifte 9 miteinander verbunden.

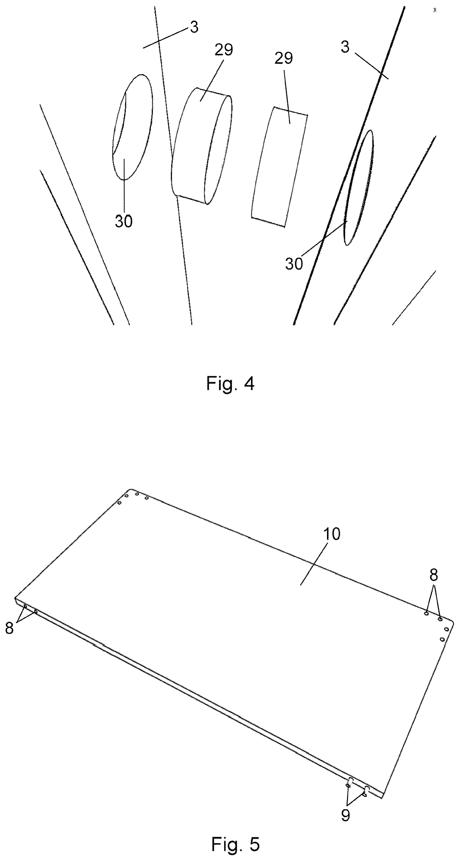

In Figur 4 sind scheibenförmige Magnetelemente 29 in entsprechenden Ausnehmungen 30 aufgenommen, um Seitenwände 3 an einer Seitenkante des Stalls 1 miteinander zu verbinden.

Figur 5 zeigt eine erfindungsgemäße Bodenplatte 10, die zum einen Stifte 9 aufweist und zum anderen Ausnehmungen 8 für Stifte. Eine Abdeckplatte 2 gemäß Figur 6 weist weiters eine Öffnung 11 auf, an deren Rand Magnetelemente 29 vorgesehen sind, um beispielsweise eine Abdeckplatte zum Verschließen der Öffnung 11 zu befestigen.

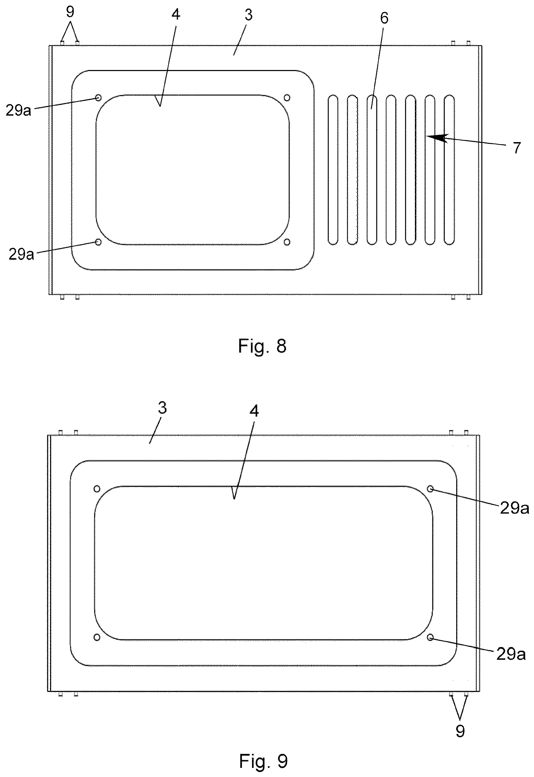

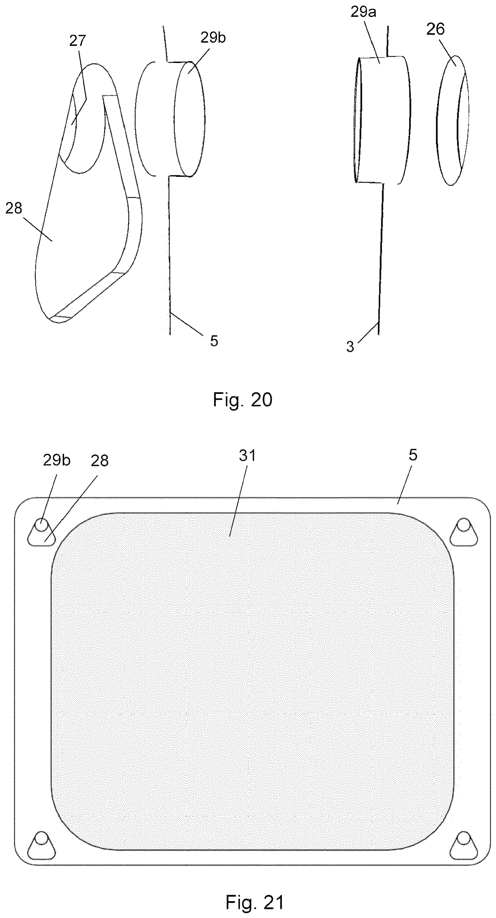

Figur 7 zeigt eine Seitenwand 3 mit Stiften 9. Die Seitenwand 3 gemäß Figur 8 weist neben einer Öffnung 4 eine Mehrzahl von Durchbrechungen 6 auf, die ein Gitter 7 ausbilden. Weiters sind im Randbereich der Öffnung 4 Magnetelemente 29a vorgesehen (siehe Fig. 20), mit denen ein Einsatzteil 5 an der Öffnung 4 befestigt werden kann. Figur 9 zeigt eine Seitenwand 3 mit einer besonders großen Öffnung 4 und Magnetelementen 29a.

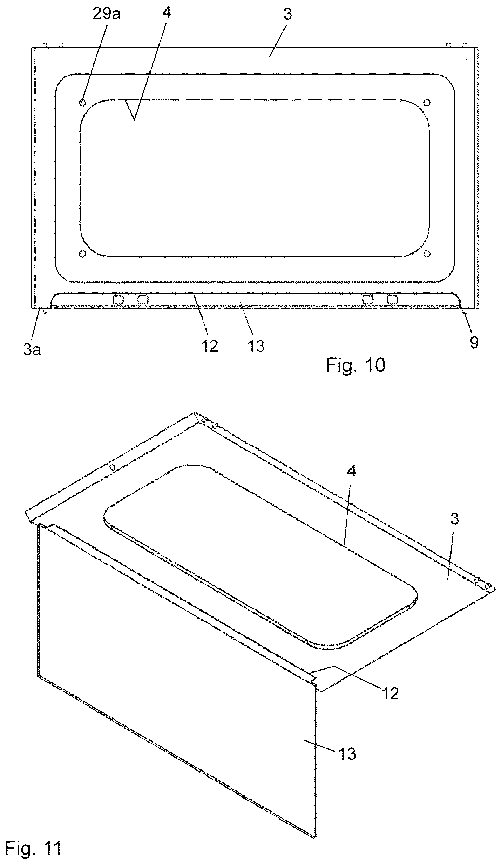

Die Seitenwand 3 gemäß Figur 10 weist an ihrer unteren Seitenkante 3a eine Ausnehmung 12 auf, in die eine Kotlade 13 eingeschoben ist. Wie aus Figur 11 ersichtlich ist, erstreckt sich die Kotlade 13 im Wesentlichen über eine Fläche, die jener der Bodenplatte 10 entspricht, sodass Kot von der Kotlade 13 aufgefangen wird und mit dieser aus dem Stall 1 entfernt werden kann.

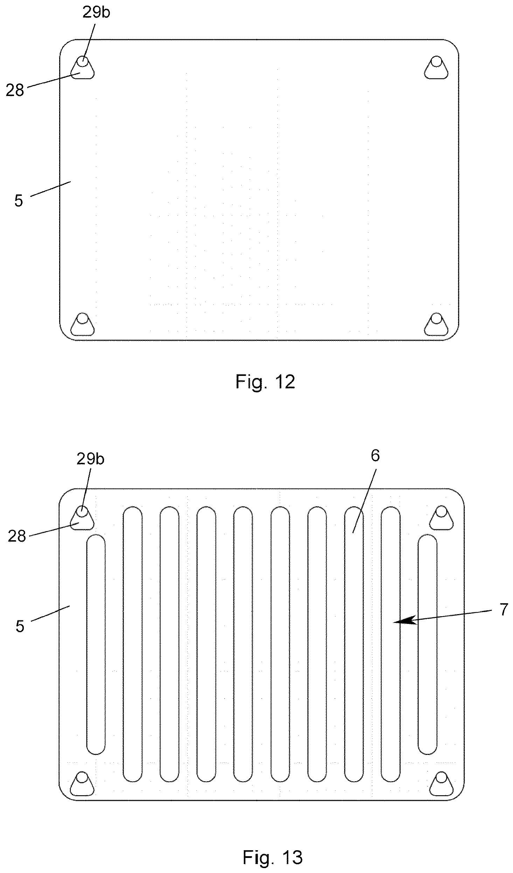

Figur 12 zeigt ein Einsatzteil 5 für eine der gezeigten Öffnungen 4, die aus einem lichtundurchlässigen Material hergestellt ist. Durch Anbringen eines solchen Einsatzteils 5 an einer Seitenwand 3 mittels der Magnetelemente 29b (siehe Fig. 20) kann der Stall 1 in seinem Inneren mehr oder weniger vollständig abgedunkelt werden.

In Figur 13 weist das Einsatzteil 5 eine Mehrzahl von Durchbrechungen 6 zur Ausbildung eines Gitters 7 zur Belüftung des Stalls 1 auf.

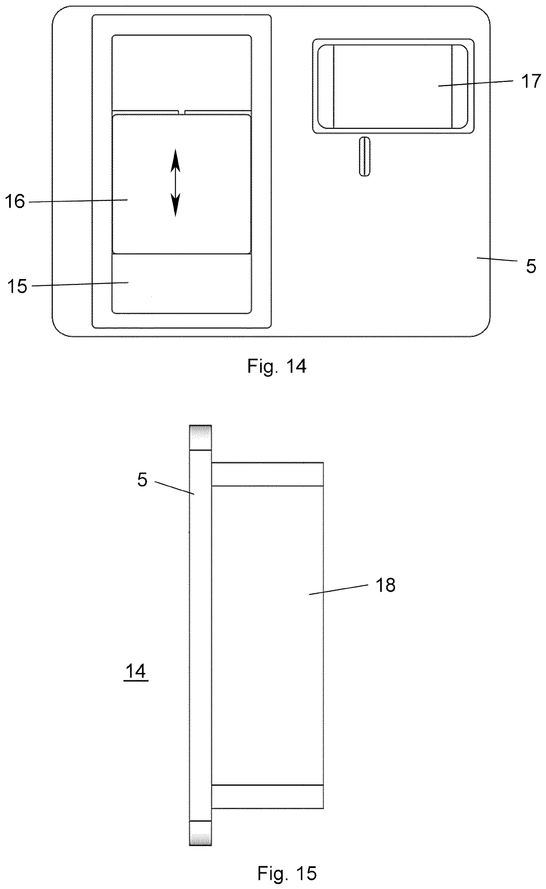

Das Einsatzteil 5 gemäß Figur 14 weist eine motorisierte Tür 16 auf, welche eine Öffnung 15 freigeben kann, wobei eine Stromversorgung und eine Steuerungseinheit für die Tür 16 mit dem Bezugszeichen 17 versehen ist. Die Steuerungseinheit 17 kann drahtlos mit einer Smart-Home Anwendung kommunizieren, um die Tür 16 zu betätigen.

Gemäß Figur 15 weist ein Einsatzteil 5 ein Behältnis 18 für Tierfutter auf. Das Behältnis 18 kann aus einem transparenten Material gefertigt sein. Es ist für die Tiere vom Innenraum 14 des Stalls 1 aus zugänglich und kann auch von der Außenseite zum Befüllen zugänglich sein. Einbauten im Behältnis 18 dienen dazu, das Futter im unteren Bereich des Behältnisses daran zu hindern, dass es durch die Schwerkraft in das Stallinnere rutscht.

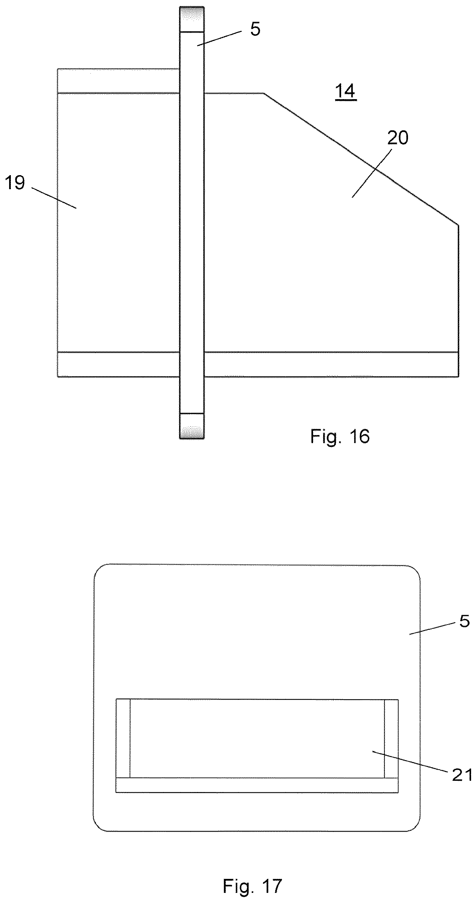

In Figur 16 ist zu erkennen, dass ein Einsatzteil 5 eine in den Innenraum 14 des Stalls ragende Legeschale 20 aufweist, in die Hühner ihre Eier legen können. Eier können an der Außenseite über eine Entnahme 19 entnommen werden.

Gemäß Figur 17 ist ein Pflanzbehälter 21 an der Außenseite eines erfindungsgemäßen Einsatzteils 5 angeordnet.

Sowohl das Behältnis 18 für Tierfutter als auch die Legeschale 20 und der Pflanzbehälter 21 können zerlegbar ausgebildet und mittels Magnetelementen 29 und/oder Stiften zusammengehalten sein.

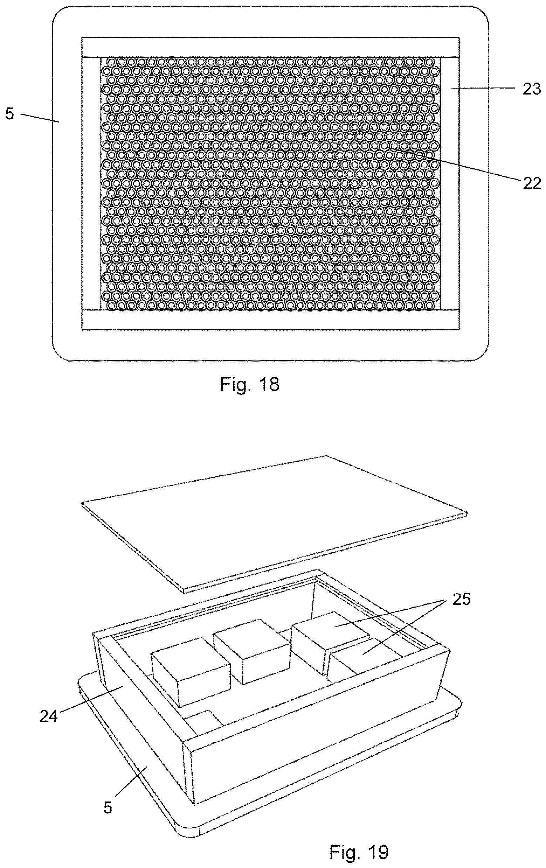

In Figur 18 ist ein Insektenhotel als Einsatzteil 5 dargestellt, welches aus einer Vielzahl von sich quer zur Ebene der Seitenfläche 3 erstreckenden Holzröhren 22, bevorzugt Bambusröhren 22 besteht. Die Holzröhren 22 werden von einem Rahmen 23 zusammengehalten, wobei der Rahmen 23 wiederum zerlegbar sein kann und durch Magnetelemente 29 und/oder Stifte zusammengehalten sein kann.

Das Einsatzteil 5 gemäß Figur 19 weist ein Gehäuse 24 zur Aufnahme elektrischer Komponenten 25 auf, wobei das Gehäuse 24 in an einer Seitenwand 3 des Stalls 1 festgelegtem Zustand des Einsatzteils 5 an der Außenseite des Stalls 1 angeordnet ist.

Figur 20 zeigt schematisch eine Magnethalterung zur Befestigung eines beliebigen Einsatzteils 5 den Rändern einer Öffnung 4 einer Seitenwand 3. Dabei wird das Einsatzteil so angeordnet, dass es die Öffnung vollständig abdeckt und an den Rändern der Öffnung auf der Seitenwand aufliegt. In diesem Randbereich, in dem das Einsatzteil und die Seitenwand einander überlappen, sind Magnetelemente vorgesehen, und zwar an dem einen Element, vorzugsweise an der Seitenwand 3, ein erster Magnet 29a und an dem anderen Element, vorzugsweise an dem Einsatzteil 5, ein zweiter Magnet 29b. Der erste Magnet 29a ist hierbei in einer Ausnehmung 26 aufgenommen und der zweite Magnet 29b in einer Ausnehmung 27 aufgenommen. Im Bereich der Ausnehmung 27 bzw. die Ausnehmung 27 zumindest teilweise umgebend ist eine Vertiefung 28 ausgebildet, wobei der zweite Magnet 29b so in der Ausnehmung 27 aufgenommen ist, dass seine Oberfläche mit dem Grund der Vertiefung 28 fluchtet. Der erste Magnet 29a ist so in der Ausnehmung 26 aufgenommen, dass er über die dem Einsatzteil 5 zugewandte Oberfläche der Seitenwand 3 vorragt, und zwar bevorzugt um ein Ausmaß, das der Tiefe der Vertiefung 28 entspricht. Dies führt dazu, dass der erste Magnet 29a beim Auflegen des Einsatzteils 5 auf die Seitenwand 3 in die Vertiefung 28 eingreift. Für die Herstellung der Magnetverbindung muss das Einsatzteil 5 in der Folge lediglich so verschoben werden, dass der erste Magnet 29a innerhalb der Vertiefung 28 relativ zum zweiten Magneten 29b bewegt wird, wobei diese Bewegung durch die Magnetkraft unterstützt wird. Die Magnetkraft kann so gewählt sein, dass das einsatzteil bereits ab einem Abstand von 1-2 cm an die Seitenwand herangezogen wird. Um das Verschieben in die richtige Endposition zu erleichtern, hat die Vertiefung 28 eine zum zweiten Magneten 29b konvergierende Kontur. Bevorzugt ist die Kontur im Wesentlichen dreieckförmig.

Bevorzugt ist eine Mehrzahl der beschriebenen Magnethalterungen für die Befestigung eines Einsatzteils vorgesehen, und zwar bevorzugt an jeder Seite oder an jeder Ecke der Öffnung jeweils eine Magnethalterung. Im Fall einer rechteckigen Öffnung sind somit bevorzugt wenigstens vier Magnethalterungen der beschriebenen Art vorgesehen. Das Eingreifen des ersten Magneten 29a in die Vertiefung 28 erleichtert es einer Person dabei, für alle Magnete 29a gleichzeitig die richtige Stelle aufzufinden.

Um die Magnethalterung zu lösen, ist es lediglich erforderlich, das Eisatzteil 5 so zu verschieben, dass sich der bzw. die erste(n) Magnet(e) vom dem bzw. den zugeordneten zweiten Magnet(en) innerhalb der Vertiefung 28 wegbewegt bzw. wegbewegen.

Figur 21 zeigt eine weitere Ausbildung eines Einsatzteils 5, welches eine lichtdurchlässige Scheibe 31 z.B. aus Acrylglas aufweist. Die Scheibe 31 lässt möglichst viel Licht in das Innere des Stalls 1 und dient als Wärmeisolierung bei niedrigen Außentemperaturen.

## Patentansprüche

1. Stall (1) für Tiere, insbesondere Hühnerstall, mit zumindest einer Bodenplatte (10), an der zumindest einen Bodenplatte (10) zerlegbar festgelegten Seitenwänden (3) sowie zumindest einer an den Seitenwänden (3) zerlegbar festgelegten Abdeckplatte (2), **dadurch gekennzeichnet, dass** zumindest eine Seitenwand (3) zumindest eine Öffnung (4) aufweist, an deren Rändern ein die Öffnung (4) verschließendes Einsatzteil (5) mittels Magnetelementen (29a,29b) festlegbar ist.

2. Stall nach Anspruch 1, **dadurch gekennzeichnet, dass** der Stall (1) eine Bodenplatte (10) aufweist, an der allseitig Seitenwände (3) festgelegt sind.

3. Stall nach Anspruch 1, **dadurch gekennzeichnet, dass** mehrere Bodenplatten (10) zerlegbar miteinander verbunden sind und Seitenwände (3) zumindest an frei liegenden Seiten der Bodenplatten (10) festgelegt sind.

4. Stall nach einem der Ansprüche 1, 2 oder 3, **dadurch gekennzeichnet, dass** an einer ersten Abdeckplatte (2) zweite Seitenwände (3) festgelegt sind und an diesen zweiten Seitenwänden (3) eine zweite Abdeckplatte (2) festgelegt ist, wobei die erste Abdeckplatte (2) bevorzugt eine Öffnung (11) aufweist, wobei bevorzugt an deren Rand zumindest ein Magnetelement (29) zur magnetischen Festlegung einer Aufstiegshilfe für Tiere angeordnet ist.

5. Stall nach einem der Ansprüche 1 bis 4, **dadurch gekennzeichnet, dass** eine Seitenwand (3), bevorzugt zusätzlich zu einer Öffnung (4), eine Mehrzahl von länglichen Durchbrechungen (6) zur Ausbildung eines Gitters (7) aufweist.

6. Stall nach einem der Ansprüche 1 bis 5, **dadurch gekennzeichnet, dass** eine Seitenwand (3) an ihrer der Bodenplatte (10) zugewandten Kante eine Ausnehmung (12) zum Einschub einer Kotlade (13) aufweist.

7. Stall nach einem der Ansprüche 1 bis 6, **dadurch gekennzeichnet, dass** ein Einsatzteil (5) aus einem lichtundurchlässigen Material besteht.

8. Stall nach einem der Ansprüche 1 bis 7, **dadurch gekennzeichnet, dass** ein Einsatzteil (5) aus einem lichtdurchlässigen Material besteht und bevorzugt eine verschließbare Durchbrechung aufweist.

9. Stall nach einem der Ansprüche 1 bis 8, **dadurch gekennzeichnet, dass** ein Einsatzteil (5) eine Mehrzahl von länglichen Durchbrechungen (6) zur Ausbildung eines Gitters (7) aufweist.

10. Stall nach einem der Ansprüche 1 bis 9, **dadurch gekennzeichnet, dass** ein Einsatzteil (5) eine Tür (16) aufweist, die bevorzugt motorbetrieben und automatisch öffenbar ist.

11. Stall nach einem der Ansprüche 1 bis 10, **dadurch gekennzeichnet, dass** ein Einsatzteil (5) ein Behältnis (18) für Tierfutter aufweist, wobei das Behältnis (18) bevorzugt transparent und weiters bevorzugt mehrteilig ausgebildet ist.

12. Stall nach einem der Ansprüche 1 bis 11, **dadurch gekennzeichnet, dass** ein Einsatzteil (5) einen Wasserbehälter aufweist, wobei der Wasserbehälter bevorzugt transparent und weiters bevorzugt mehrteilig ausgebildet ist.

13. Stall nach einem der Ansprüche 1 bis 12, **dadurch gekennzeichnet, dass** ein Einsatzteil (5) eine sich in das Innere (14) des Stalls (1) erstreckende Legeschale (20) für das Eierlegen ausbildet, wobei die Legeschale (20) über eine öffenbare Abdeckung von außen zugänglich ist.

14. Stall nach einem der Ansprüche 1 bis 13, **dadurch gekennzeichnet, dass** ein Einsatzteil (5) einen Pflanzbehälter (21) aufweist, der in an einer Seitenwand (3) des Stalls festgelegtem Zustand des Einsatzteils (5) außerhalb des Stalls (1) angeordnet ist.

15. Stall nach einem der Ansprüche, 1 bis 14, **dadurch gekennzeichnet, dass** ein Einsatzteil (5) eine Vielzahl von sich quer zur Ebene der Seitenfläche erstreckenden Holzröhren (22), bevorzugt Bambusröhren aufweist.

16. Stall nach einem der Ansprüche 1 bis 15, **dadurch gekennzeichnet, dass** ein Einsatzteil (5) ein Gehäuse (24) zur Aufnahme elektrischer Komponenten (25) aufweist, wobei das Gehäuse (24) in an einer Seitenwand (3) des Stalls (1) festgelegtem Zustand des Einsatzteils (5) außerhalb des Stalls (1) angeordnet ist.

17. Stall nach einem der Ansprüche 1 bis 16, **dadurch gekennzeichnet, dass** die Magnetelemente einen ersten, in einer ersten Ausnehmung (26) teilweise aufgenommenen und aus der ersten Ausnehmung (26) teilweise herausragenden Magneten (29a) und einen zweiten, in einer zweiten Ausnehmung (27) vollständig aufgenommenen, Magneten (29b) umfassen, wobei die zweite Ausnehmung (27) am Grund einer die zweite Ausnehmung (27) umgebenden Vertiefung (28) ausgebildet ist.

18. Set zum Aufbau eines Stalls für Tiere nach einem der Ansprüche 1 bis 17, insbesondere eines Hühnerstalls, zumindest umfassend eine Bodenplatte (10), eine Abdeckplatte (2) sowie Seitenwände (3) und wenigstens einen Einsatzteil (5).
